(19) Europäisches Patentamt

European Patent Office

Office européen des brevets

(11) **EP 4 036 776 B1**

(12) **EUROPEAN PATENT SPECIFICATION**

(45) Date of publication and mention
of the grant of the patent:
**16.07.2025 Bulletin 2025/29**

(21) Application number: **21213116.3**

(22) Date of filing: **08.12.2021**

(51) International Patent Classification (IPC):
**G06N 3/084** $^{(2023.01)}$ **G06F 21/62** $^{(2013.01)}$

(52) Cooperative Patent Classification (CPC):
**G06F 21/6245; G06N 3/084**

(54) **INFORMATION PROCESSING PROGRAM, INFORMATION PROCESSING METHOD, AND INFORMATION PROCESSING APPARATUS**

INFORMATIONSVERARBEITUNGSPROGRAMM,
INFORMATIONSVERARBEITUNGSVERFAHREN UND
INFORMATIONSVERARBEITUNGSVORRICHTUNG

PROGRAMME DE TRAITEMENT D'INFORMATIONS, PROCÉDÉ DE TRAITEMENT
D'INFORMATIONS ET APPAREIL DE TRAITEMENT D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2021 JP 2021012143**

(43) Date of publication of application:
**03.08.2022 Bulletin 2022/31**

(73) Proprietor: **FUJITSU LIMITED
Kawasaki-shi, Kanagawa 211-8588 (JP)**

(72) Inventor: **Higuchi, Yuji
Kawasaki-shi, Kanagawa 211-8588 (JP)**

(74) Representative: **Hoffmann Eitle
Patent- und Rechtsanwälte PartmbB
Arabellastraße 30
81925 München (DE)**

(56) References cited:
• **DIVYAM MADAAN ET AL: "Learning to Generate
Noise for Robustness against Multiple
Perturbations", ARXIV.ORG, CORNELL
UNIVERSITY LIBRARY, 201 OLIN LIBRARY
CORNELL UNIVERSITY ITHACA, NY 14853, 22
June 2020 (2020-06-22), XP081700150**
• **QINGRONG CHEN ET AL: "Differentially Private
Data Generative Models", ARXIV.ORG, CORNELL
UNIVERSITY LIBRARY, 201 OLIN LIBRARY
CORNELL UNIVERSITY ITHACA, NY 14853, 6
December 2018 (2018-12-06), XP080989669**
• **HAN QIU ET AL: "FenceBox: A Platform for
Defeating Adversarial Examples with Data
Augmentation Techniques", ARXIV.ORG,
CORNELL UNIVERSITY LIBRARY, 201 OLIN
LIBRARY CORNELL UNIVERSITY ITHACA, NY
14853, 3 December 2020 (2020-12-03),
XP081828235**

**Description**

FIELD

The embodiment discussed herein is related to an information processing program, an information processing method, and an information processing apparatus.

BACKGROUND

In recent years, development and use of systems using machine learning have rapidly progressed. Meanwhile, various security problems unique to the systems using the machine learning have been found. For example, a training data estimation attack that estimates and steals the training data used for the machine learning is known.

In the training data estimation attack, for example, a machine learning model is extracted by analyzing a face authentication edge device used for a face authentication system. A face image used as the training data is estimated by performing the training data estimation attack on the machine learning model.

The training data estimation attack is an attack performed on a trained model (machine learning model) having undergone a training phase. The training data estimation attack is classified into a black box attack and a white box attack.

The black box attack estimates the training data from input data and output data in an inference phase.

As a defensive technique against the black box attack, for example, there is a known technique in which output information is simply decreased by, for example, adding noise to the output of a trained model or deleting the degree of certainty. There also is a known technique in which, against the attack, a fake gradient is provided and the attack is guided to a decoy data set prepared in advance.

The white box attack estimates from the trained machine learning model itself the training data. As a defensive technique against the white box attack, there is a known technique in which a trained machine learning model resistant to the training data estimation is generated by adding appropriate noise to parameters of the machine learning model when the parameters are updated. Examples of such a defensive technique against the white box attack include, for example, differential private-stochastic gradient descent (DP-SGD).

Japanese Laid-open Patent Publication Nos. 2020-115312 and 2020-119044 are disclosed as related art.

Divyam Madaan et al: "Learning to Generate Noise for Robustness against Multiple Perturbations" describes learning to generate noise for robustness against multiple perturbations.

Qingrong Chen et al: "Differentially Private Data Generative Models" describes differentially private data generative models.

An Qiu et al: "FenceBox: A Platform for Defeating Adversarial Examples with Data Augmentation Techniques" describes a platform for defeating adversarial examples with data augmentation techniques

SUMMARY

[TECHNICAL PROBLEM]

In many cases, there is usually a risk that an attacker obtains a machine learning model itself. Thus, only a defense against a black box attack is insufficient.

Meanwhile, in the related-art defensive technique against the white box attack, since noise is added to the parameters of the machine learning model, estimation accuracy decreases. Thus, the accuracy is traded off for the strength of the resistance against the attack. Accordingly, there is a problem in that this technique is not able to be introduced into a system in which the accuracy of the machine learning model is demanded.

In one aspect, an object of the present disclosure is to enable generation of a machine learning model resistant to a white box attack that estimates training data.

[SOLUTION TO PROBLEM]

The above problem is solved by the subject matter of the independent claims. Examples and technical descriptions of apparatuses, products and/or methods in the description and/or drawings which are not covered by the claims are presented not as embodiments of the invention but as background art or examples useful for understanding the invention. According to an aspect of the examples, an information processing program that causes at least one computer to execute a process, the process includes, generating additional data by inputting meaningless data to a first machine learning model which has been trained with first training data; acquiring second training data by combining the first training data and the additional data; and training a machine learning model by using the second training data.

[ADVANTAGIOUS EFFECTS OF INVENTION]

According to an embodiment, the machine learning model resistant to the white box attack that estimates training data may be generated.

BRIEF DESCRIPTION OF DRAWINGS

FIG. 1 illustrates an example of a hardware configuration of an information processing apparatus as an example of an embodiment;

FIG. 2 illustrates an example of a functional configuration of the information processing apparatus as the example of the embodiment;

FIG. 3 explains processes of a mini-batch creation unit in the information processing apparatus as the example of the embodiment;

FIG. 4 illustrates an outline of a technique for training a machine learning model in the information processing apparatus as the example of the embodiment;

FIG. 5 is a flowchart explaining the technique for training the machine learning model in the information processing apparatus as the example of the embodiment; and

FIG. 6 explains results of a white box attack that estimates training data performed on the machine learning model generated by the information processing apparatus as the example of the embodiment.

DESCRIPTION OF EMBODIMENTS

Hereinafter, an embodiment related to an information processing program, a method of processing information, and an information processing apparatus will be described with reference to the drawings. However, the following embodiment is merely an example and does not intend to exclude application of various modification examples or techniques that are not explicitly described in the embodiment. For example, the present embodiment may be modified in a various manner and carried out without departing from the the embodiment. Each drawing does not indicate that only components illustrated in the drawing are provided. The drawings indicate that other functions and the like may be included.

(A) Configuration

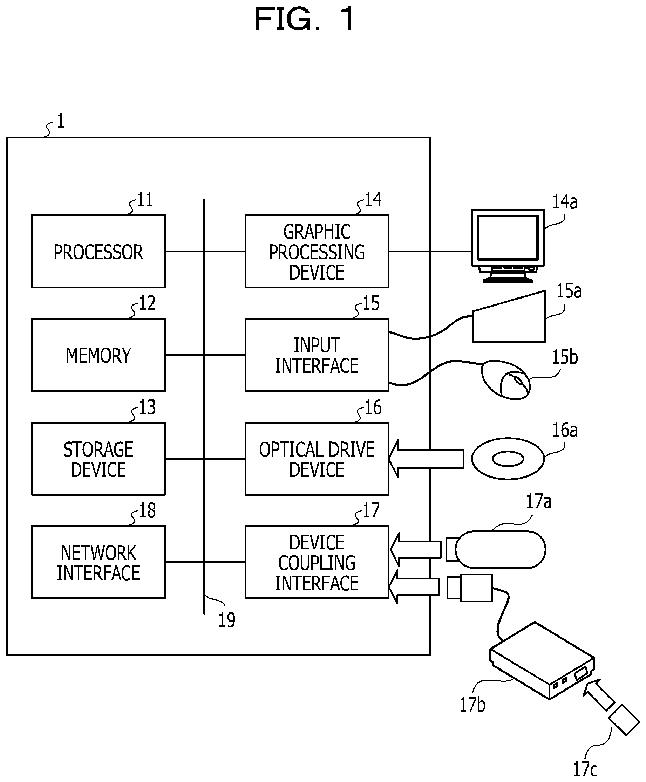

FIG. 1 illustrates an example of a hardware configuration of an information processing apparatus 1 as an example of the embodiment.

As illustrated in FIG. 1, the information processing apparatus 1 includes, for example, a processor 11, a memory 12, a storage device 13, a graphic processing device 14, an input interface 15, an optical drive device 16, a device coupling interface 17, and a network interface 18 as the components. These components 11 to 18 are configured so as to be mutually communicable via a bus 19.

The processor (control unit) 11 controls the entirety of this information processing apparatus 1. The processor 11 may be a multiprocessor. For example, the processor 11 may be any one of a central processing unit (CPU), a microprocessor unit (MPU), a digital signal processor (DSP), an application-specific integrated circuit (ASIC), a programmable logic device (PLD), and a field-programmable gate array (FPGA). The processor 11 may be a combination of two or more types of elements of the CPU, the MPU, the DSP, the ASIC, the PLD, and the FPGA.

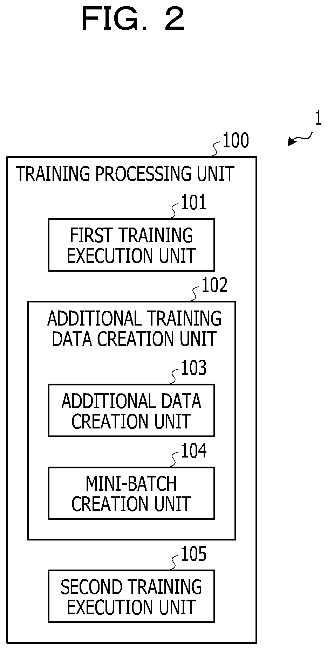

The processor 11 executes a control program (information processing program: not illustrated), thereby realizing the functions as a training processing unit 100 (a first training execution unit 101, an additional training data creation unit 102, and a second training execution unit 105) exemplified in FIG. 2.

The information processing apparatus 1 realizes the function as the training processing unit 100 by executing, for example, programs (the information processing program and an operating system (OS) program) recorded in a computer-readable non-transitory recording medium.

Programs in which content of processing to be executed by the information processing apparatus 1 is described may be recorded in various recording media. For example, the programs to be executed by the information processing apparatus 1 may be stored in the storage device 13. The processor 11 loads at least a subset of the programs in the storage device 13 into the memory 12 and executes the loaded programs.

The programs to be executed by the information processing apparatus 1 (processor 11) may be recorded in a non-transitory portable recording medium such as an optical disc 16a, a memory device 17a, and a memory card 17c. For example, the programs stored in the portable recording medium become executable after being installed in the storage device 13 by control from the processor 11. The processor 11 may read the programs directly from the portable recording medium and execute the programs.

The memory 12 is a storage memory including a read-only memory (ROM) and a random-access memory (RAM). The RAM of the memory 12 is used as a main storage device of the information processing apparatus 1. The OS program and the control program to be executed by the processor 11 are at least partially stored in the RAM temporarily. Various types of data desired for processing by the processor 11 are stored in the memory 12.

The storage device 13 is a storage device such as a hard disk drive (HDD), a solid-state drive (SSD), or a storage class memory (SCM) and stores various types of data. The storage device 13 is used as an auxiliary storage device of this information processing apparatus 1. The OS program, the control program, and the various types of data are stored in the storage device 13. The control program includes an information processing program.

As the auxiliary storage device, a semiconductor storage device such as an SCM or a flash memory may be used. A plurality of storage devices 13 may be used to configure redundant arrays of inexpensive disks (RAID).

The storage device 13 may store various types of data generated when the first training execution unit 101, the additional training data creation unit 102 (an additional data creation unit 103 and a mini-batch creation unit 104), and the second training execution unit 105, which will be described later, execute processes.

A monitor 14a is coupled to the graphic processing device 14. The graphic processing device 14 displays an image on a screen of the monitor 14a in accordance with an instruction from the processor 11. Examples of the monitor 14a include a display device with a cathode ray tube (CRT), a liquid crystal display device, and the like.

A keyboard 15a and a mouse 15b are coupled to the input interface 15. The input interface 15 transmits signals transmitted from the keyboard 15a and the mouse 15b to the processor 11. The mouse 15b is an example of a pointing device, and a different pointing device may be used. Examples of the different pointing device include a touch panel, a tablet, a touch pad, a track ball, and the like.

The optical drive device 16 reads data recorded in the optical disc 16a by using laser light or the like. The optical disc 16a is a portable non-transitory recording medium in which data is recorded so that the data is readable using light reflection. Examples of the optical disc 16a include a Digital Versatile Disc (DVD), a DVD-RAM, a compact disc read-only memory (CD-ROM), a CD-recordable (R)/CD-rewritable (RW), and the like.

The device coupling interface 17 is a communication interface for coupling peripheral devices to the information processing apparatus 1. For example, the memory device 17a or a memory reader-writer 17b may be coupled to the device coupling interface 17. The memory device 17a is a non-transitory recording medium such as a Universal Serial Bus (USB) memory which has the function of communication with the device coupling interface 17. The memory reader-writer 17b writes data to the memory card 17c or reads data from the memory card 17c. The memory card 17c is a card-type non-transitory recording medium.

The network interface 18 is coupled to a network (not illustrated). The network interface 18 may be coupled to another information processing apparatus, a communication device, or the like via the network. For example, an input image or an input text may be input via the network.

FIG. 2 illustrates an example of a functional configuration of the information processing apparatus 1 as the example of the embodiment. As illustrated in FIG. 2, the information processing apparatus 1 has the function of the training processing unit 100.

In the information processing apparatus 1, the processor 11 executes the control program (information processing program), thereby realizing the function as the training processing unit 100.

The training processing unit 100 realizes a learning process (training process) in machine learning by using training data. For example, the information processing apparatus 1 functions as a training device that trains a machine learning model by using the training processing unit 100.

The training processing unit 100 realizes the learning process (training process) in machine learning by using, for example, training data (teacher data) to which a correct answer label is assigned. The training processing unit 100 trains the machine learning model by using the training data and generates a trained machine learning model resistant to training data estimation.

The machine learning model may be, for example, a deep learning model (deep neural network). A neural network may be a hardware circuit or a virtual network by software that couples layers virtually built in a computer program by the processor 11 or the like.

As illustrated in FIG. 2, the training processing unit 100 includes the first training execution unit 101, the additional data creation unit 103, and the second training execution unit 105.

The first training execution unit 101 trains the machine learning model by using the training data and generates the trained machine learning model.

The training data is configured as, for example, a combination of input data x and correct answer output data y.

The training of the machine learning model performed by the first training execution unit 101 by using the training data may be referred to as first training. The machine learning model before the training by using the first training execution unit 101 is performed may be referred to as a first machine learning model. Since the first machine learning model is a machine learning model before the training is performed, the first machine learning model may be referred to as an empty machine learning model. Also, the machine learning model may be simply referred to as a model.

Hereinafter, the training data used for the first training by the first training execution unit 101 may be referred to as first training data or training data A.

The trained machine learning model generated by the first training execution unit 101 may be referred to as a second machine learning model or a machine learning model A. Model parameters of the machine learning model A are set by the first training performed by the first training execution unit 101.

The first training execution unit 101 is able to generate the second machine learning model (machine learning model A) by training the first machine learning model with the training data A by using a known technique. Specific description of the generation of the second machine learning model is omitted.

The additional training data creation unit 102 creates training data used when the second training execution unit 105, which will be described later, performs additional training on the second machine learning model (machine learning model A) generated by the first training execution unit 101. Hereinafter, the training data used when the additional training is performed on the second machine learning model may be referred to as second training data or training data B. The training data B may be referred to as additional training data.

The additional training data creation unit 102 includes the additional data creation unit 103 and the mini-batch creation unit 104.

The additional data creation unit 103 creates a plurality of pieces of additional data. The additional data is data that is not input to the machine learning model A in a usual machine learning model operation, and the additional data is artificial data that is classified into a specific label by a classifier.

The additional data creation unit 103 creates the additional data by, for example, a gradient descent method in which the gradient of the machine learning model A is obtained and in which input is updated in a direction in which the degree of certainty increases.

Hereinafter, an example of a technique (stages 1 to 4) for generating the additional data by using a simple gradient descent method is described below.

(Stage 1) The additional data creation unit 103 first sets an objective function.

Input of machine learning model A: X
Output of machine learning model A:

$$f(X) = (f_1(X), ..., f_n(X))$$

When the target label is set to t, the objective function may be represented by, for example, the following expression (1).

$$L(X) = (1 - f_t(X))^2 \quad (1)$$

When the value of L(X) described above is minimized, X is classified into a label t with the degree of certainty of 1. Since X depends on the label t as described above, the processing of stage 1 is desired to be performed on all labels.

(Stage 2) As an initial value, input of meaningless data (for example, noise or a certain value) with respect to the machine learning model A is prepared (hereinafter, referred to as initial value $X_0$).

The initial value $X_0$ may be prepared and set in advance by an operator or the like or generated by the additional data creation unit 103.

(Stage 3) The additional data creation unit 103 obtains a derivative value $L'(X_0)$ of L (X) around $X_0$.

(Stage 4) The additional data creation unit 103 sets $X_0 - \lambda L'(X_0)$ as the additional data. $\lambda$ Is a hyperparameter.

The method of creating additional data is not limited to the above-described method and may be appropriately changed and performed. For example, another objective function may be used. The stage 4 may be repeated a predetermined number of times. The expression of stage 4 may be changed.

The additional data creation unit 103 creates the additional data by mechanically generating meaningless data ($X_0$) as the initial value by using machine learning model A (first machine learning model) trained with the training data A (first training data).

To generate the additional data, an optimization technique other than the gradient descent method such as an evolutionary algorithm may be used. The optimization technique other than the gradient descent method may be change and performed in various manners.

When the input data is an image data, for example, a fooling image may be used as the additional data. The fooling image may be generated by a known method, and description thereof is omitted.

The mini-batch creation unit 104 creates the second training data (training data B, additional training data) by adding to the training data A the additional data created by the additional data creation unit 103.

The mini-batch creation unit 104 performs up-sampling of the training data A or down-sampling of the additional data so that the number of samples of the additional data is sufficiently smaller than the number of samples of the training data A.

For example, the mini-batch creation unit 104 adjusts the number of pieces of the training data A and the number of pieces of the additional data so that the ratio of the pieces of the additional data to the pieces of the training data A is a predetermined value ($\alpha$).

For example, when the ratio of the pieces of the additional data to the pieces of the training data A is smaller than the predetermined ratio $\alpha$, the mini-batch creation unit 104 performs at least one of down-sampling of the training data A and up-sampling of the additional data, thereby setting the ratio of the pieces of the additional data to the pieces of the training data A to be $\alpha$. In contrast, when the ratio of the pieces of the additional data to the pieces of the training data A is greater than or equal to the predetermined ratio $\alpha$, the mini-batch creation unit 104 performs at least one of up-sampling of the training data A and down-sampling of the additional data, thereby setting the ratio of the pieces of the additional data to the pieces of the training data A to be $\alpha$. A technique such as noise addition may be used for up-sampling.

Increasing the ratio of the pieces of the additional data to the pieces of the training data A may improve the machine learning model (machine learning model B) generated by the second training execution unit 105, which will be described later, by using the second training data (training data B) in terms of resistance to a white box attack. Meanwhile, increasing the ratio of the pieces of the additional data to the pieces of the training data A may decrease the accuracy of the machine learning model (machine learning model B). Accordingly, it is desirable that the threshold ($\alpha$) representing the ratio of the pieces of the additional data to the pieces of the training data A be set to be a value as large as possible within a range in which the accuracy of the machine learning model (machine learning model B) is maintained.

The mini-batch creation unit 104 creates a plurality of mini-batches by using the training data A and the additional data.

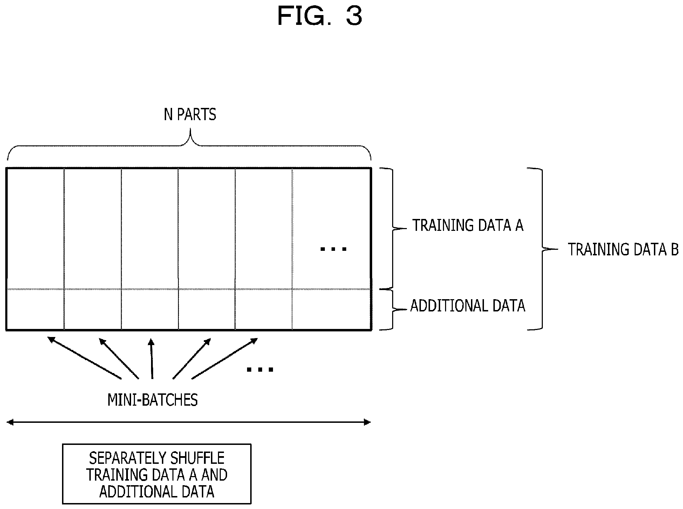

FIG. 3 explains processes of the mini-batch creation unit 104 in the information processing apparatus 1 as the example of the embodiment.

For stabilizing training (machine learning) by the second training execution unit 105, which will be described later, the mini-batch creation unit 104 performs shuffling so that each of the mini-batches includes a certain ratio of the additional data.

For example, the mini-batch creation unit 104 separately randomly rearranges (shuffles) the training data A and the additional data and equally divides the rearranged training data A and the rearranged additional data into N parts (N is a natural number of two or more) separately. Hereinafter, 1/N of the training data A generated by equally dividing the training data by N may be referred to as divided training data A. Also, 1/N of the additional data generated by equally dividing the additional data into N parts may be referred to as divided additional data A.

The mini-batch creation unit 104 creates a single mini-batch by combining a single part of the divided training data A extracted from the training data A divided into N parts (N-part divided) and the divided additional data extracted from the N-part divided additional data. The mini-batch is used for training for the machine learning model by the second training execution unit 105, which will be described later.

For example, the mini-batch creation unit 104 extracts a certain number of pieces of data from the shuffled training data A and the shuffled additional data separately and combines the extracted pieces of data into a single mini-batch. A set of the plurality of mini-batches may be referred to as training data B.

The mini-batch creation unit 104 corresponds to a second training data creation unit that creates the training data B (second training data) by combining the training data A (first training data) and the additional data. The mini-batch creation unit 104 performs up-sampling or down-sampling of at least one of the training data A and the additional data so that the ratio of the pieces of the additional data to the pieces of the training data A (first training data) is the predetermined value ($\alpha$) in the training data B.

The size of the mini-batches may be appropriately set based on machine learning know-how. The mini-batch creation unit 104 shuffles the training data A and the additional data separately. This may suppress the occurrences of gradient bias in parameters set by the training.

The second training execution unit 105 trains the machine learning model by using the training data B created by the additional training data creation unit 102, thereby creating the machine learning model resistant to a training data estimation attack.

In the present information processing apparatus 1, the second training execution unit 105 trains (additionally trains), by using the training data B, the machine learning model A trained by the first training execution unit 101.

Hereinafter, the training of the machine learning model performed by the second training execution unit 105 by using the training data B may be referred to as second training.

The trained machine learning model generated by the second training execution unit 105 may be referred to as a machine learning model B. The machine learning model B may be referred to as a third machine learning model.

The second training execution unit 105 is able to generate the third machine learning model (machine learning model B) by training the second machine learning model with the training data B by using a known technique. Specific description of the generation of the third machine learning model is omitted.

The second training execution unit 105 generates the additionally trained machine learning model B by further training (additionally training) the trained machine learning model A by using the mini-batches generated by dividing into N parts the training data B created by the additional training data creation unit 102. The model parameters of the machine learning model B are set by the second training (additional training) by the second training execution unit 105.

The second training execution unit 105 trains the machine learning model by using the training data B (second training data) and retrains the machine learning model A (first machine learning model) by using the training data B (second training data).

The machine learning model B generated by the second training (additional training) by the second training execution unit 105 is resistant to the white box attack that estimates the training data A.

Further training (additionally training) the trained machine learning model A may decrease the time taken to train the machine learning model.

(B) Operation

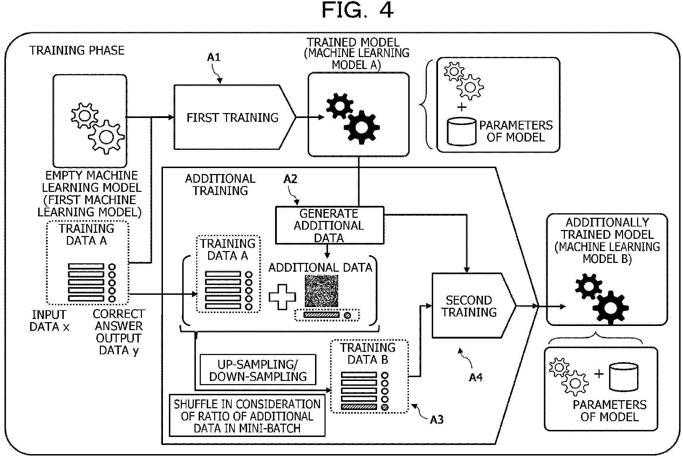

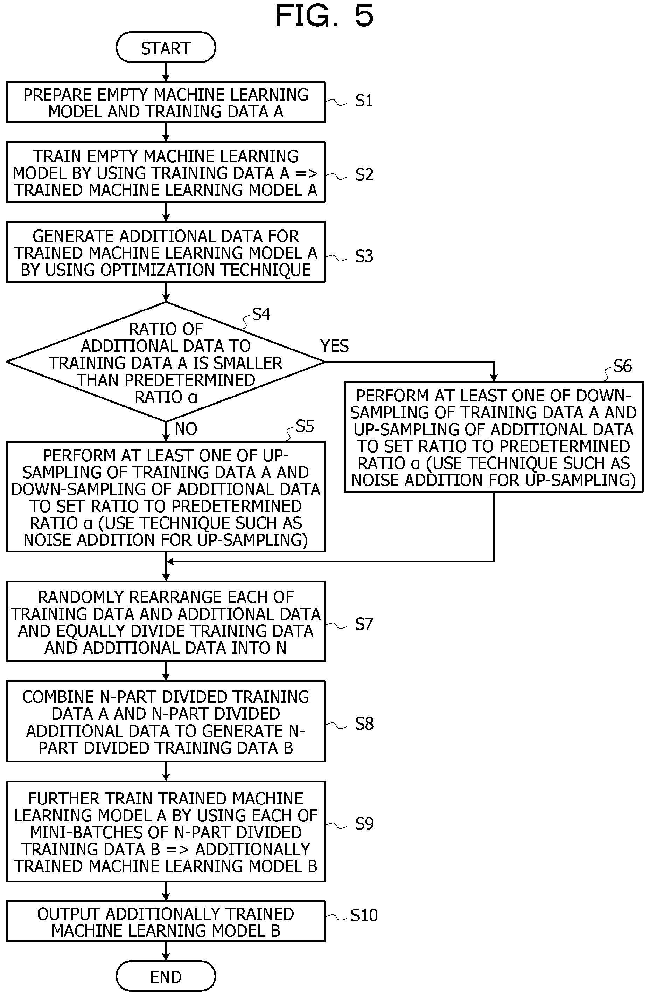

The technique for training the machine learning model in the information processing apparatus 1 as the example of the embodiment configured as described above is described in accordance with a flowchart (steps S1 to S10) illustrated in FIG. 5 with reference to FIG. 4. FIG. 4 illustrates an outline of the technique for training the machine learning model in the information processing apparatus 1.

In step S1, the operator prepares the empty machine learning model (first machine learning model) and the training data A. Information included in the empty machine learning model and the training data A is stored in a predetermined storage region of, for example, the storage device 13.

In step S2, the first training execution unit 101 trains the empty machine learning model (first machine learning model) by using the training data A (first training) to generate the trained machine learning model A (see reference sign A1 illustrated in FIG. 4).

In step S3, the additional data creation unit 103 generates the additional data by using an optimization technique for the machine learning model A (see reference sign A2 illustrated in FIG. 4).

In step S4, the mini-batch creation unit 104 compares the number of pieces of the additional data with the number of pieces of the training data A and checks whether the ratio of the pieces of the additional data to the pieces of the training data A is smaller than the predetermined ratio $\alpha$.

When the ratio of the pieces of the additional data to the pieces of the training data A is smaller than the predetermined ratio $\alpha$ as a result of the check (see a YES route in step S4), processing moves to step S6. In step S6, the mini-batch creation unit 104 performs at least one of down-sampling of the training data A and up-sampling of the additional data, thereby adjusting the ratio of the pieces of the additional data to the pieces of the training data A to be $\alpha$.

In contrast, when the ratio of the pieces of the additional data to the pieces of the training data A is greater than or equal to the predetermined ratio $\alpha$ as a result of the check (see a NO route in step S4), the processing moves to step S5. In step S5, the mini-batch creation unit 104 performs at least one of up-sampling of the training data A and down-sampling of the additional data, thereby adjusting the ratio of the pieces of the additional data to the pieces of the training data A to be $\alpha$.

Then, in step S7, the mini-batch creation unit 104 separately randomly rearranges the training data A and the additional data. The mini-batch creation unit 104 equally divides the training data A and the additional data into N parts separately.

In step S8, the mini-batch creation unit 104 creates the training data B divided into N parts (N-part divided) by combining the N-part divided training data A and the N-part divided additional data (see reference sign A3 illustrated in FIG. 4).

In step S9, the second training execution unit 105 generates the additionally trained machine learning model B by further training (additionally training) the trained machine learning model A by using each of the mini-batches of the N-part divided training data B created by the additional training data creation unit 102 (see reference sign A4 illustrated in FIG. 4).

In step S10, the second training execution unit 105 outputs the generated machine learning model B. Information included in the machine learning model B is stored in a predetermined storage region of, for example, the storage device 13.

(C) Effects

As described above, with the information processing apparatus 1 as the example of the embodiment, the additional training data creation unit 102 creates the training data B including the additional data, and the second training execution unit 105 generates the additionally trained machine learning model B by further training (additionally training) the trained machine learning model A by using this training data B.

The additional data is data that is not input in a usual machine learning model operation and is mechanically generated with, as the initial value, the meaningless data ($X_0$) with respect to the machine learning model A. Accordingly, even when the white box attack that estimates the training data is performed on the additionally trained machine learning model B, estimation of the training data A may be suppressed due to the influence of the additional data. When the white box attack that estimates the training data is performed on the machine learning model B, the additional data functions as a decoy, and the estimation of the training data A may be blocked.

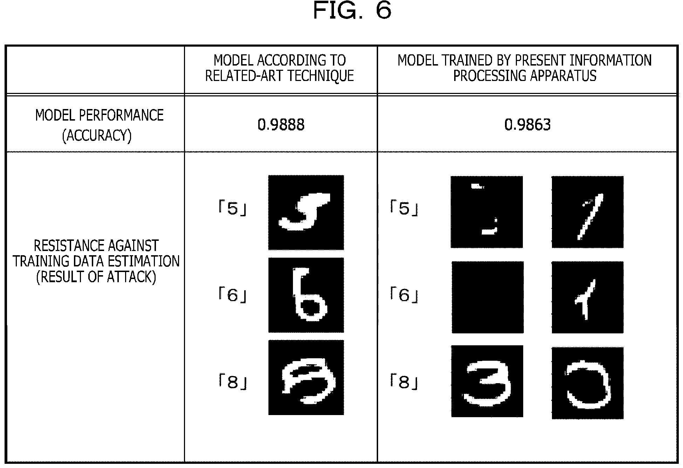

FIG. 6 explains results of the white box attack that estimates the training data performed on the machine learning model generated by the information processing apparatus 1 as the example of the embodiment.

FIG. 6 illustrates an example in which the training data estimation attack is performed with respect to the machine learning model that estimates (classifies), based on input numeric character images, numeric characters represented by the numeric character images. FIG. 6 illustrates results of the training data estimation attack performed based on the machine learning model trained by the related-art technique that adds noise to the parameters of the machine learning model and results of the training data estimation attack performed based on the trained machine learning model created by the present information processing apparatus 1.

In FIG. 6, "MODEL PERFORMANCE (ACCURACY)" indicates the performance (accuracy) of the machine learning model trained by the related-art technique and the performance (accuracy) of the machine learning model trained by the present information processing apparatus 1. It is understood that the performance (0.9863) of the machine learning model trained by the present information processing apparatus 1 is equivalent to the performance (0.9888) of the machine learning model trained by the related-art technique.

The "resistance to training data estimation (attack result)" is indicated by arranging images (numeric character images) generated by performing the training data estimation attack on each of the machine learning models and numeric values as original correct answer data of the numeric character images.

In the result of the training data estimation attack performed based on the machine learning model trained by the related-art technique, the numeric character images of the training data are reproduced by the white box attack. In contrast, in the result of the training data estimation attack performed based on the machine learning model trained by the present information processing apparatus 1, the numeric character images of the training data are not reproduced except for a subset of the numeric character images, and it is understood that the reproduction rate of the numeric character images of the training data by the white box attack is low. For example, this indicates that the machine learning model trained by the present information processing apparatus 1 is resistant to the training data estimation attack.

The related-art defending technique against the white box attack in which noise is added to the parameters of the machine learning model, the noise significantly affects the inference ability of the model, thereby significantly degrading the accuracy. In contrast, in the machine learning model trained by the present information processing apparatus 1, the additional data is unlikely to affect the inference ability of normal input. Thus, the degradation of the accuracy may be relatively suppressed.

(D) Others

The disclosed technique is not limited to the embodiment described above and may be carried out with various modifications without departing from the gist of the present embodiment.

For example, the configurations and the processes of the present embodiment may be selected as desired or may be combined as appropriate.

Although the second training execution unit 105 further trains (additionally trains) the machine learning model A trained by the first training execution unit 101 according to the above-described embodiment, it is not limiting. The second training execution unit 105 may train the empty machine learning model by using the second training data.

The above-described disclosure enables a person skilled in the art to carry out and manufacture the present embodiment.

**Claims**

1. An information processing program that causes at least one computer to execute a process, the process comprising:

   training a first machine learning model by using first training data to generate a trained machine learning model (S2);
   generating additional data by inputting meaningless data to the first machine learning model which has been trained with the first training data (S3);
   changing a number of pieces of at least one data selected from the first training data and the additional data so that a ratio of pieces of the additional data to pieces of the first training data to be a certain value (a) by up-sampling or down-sampling of at least one of the first training data and the additional data (S5, S6);
   acquiring second training data by combining the first training data and the additional data (S8); and
   retraining the first machine learning model by using the second training data (S10).

2. The information processing program according to claim 1, wherein the generating includes using an optimization technique.

3. An information processing method for a computer to execute a process comprising:

   training a first machine learning model by using first training data to generate a trained machine learning model (S2);
   generating additional data by inputting meaningless data to the first machine learning model which has been trained with the first training data (S3);
   changing a number of pieces of at least one data selected from the first training data and the additional data so that a ratio of pieces of the additional data to pieces of the first training data to be a certain value (a) by up-sampling or down-sampling of at least one of the first training data and the additional data (S5, S6);
   acquiring second training data by combining the first training data and the additional data (S8); and
   retraining the first machine learning model by using the second training data (S10).

4. The information processing method according to claim 3, wherein the generating includes using an optimization technique.

5. An information processing apparatus (1) comprising:

   a first training execution unit (101) configured to train a first machine learning model by using first training data to generate a trained machine learning model;
   an additional data creation unit (103) is configured to generate additional data by inputting meaningless data to the first machine learning model which has been trained with the first training data;
   a mini-batch creation unit (104) configured to change a number of pieces of at least one data selected from the first training data and the additional data so that a ratio of pieces of the additional data to pieces of the first training data to be a certain value (a) by up-sampling or down-sampling of at least one of the first training data and the additional data;
a second training data creation unit (104) is configured to acquire second training data by combining the first training data and the additional data; and
a second training execution unit (105) is configured to retrain the first machine learning model by using the second training data.

6. The information processing apparatus according to claim 5, wherein the additional data creation unit further uses an optimization technique to generate the additional data.


**Patentansprüche**

1. Informationsverarbeitungsprogramm, das bewirkt, dass mindestens ein Computer einen Prozess ausführt, wobei der Prozess Folgendes umfasst:

   Trainieren eines ersten Modells für maschinelles Lernen unter Verwendung von ersten Trainingsdaten, um ein trainiertes Modell (S2) für maschinelles Lernen zu erzeugen;
   Erzeugen von zusätzlichen Daten durch Eingeben von bedeutungslosen Daten in das erste Modell für maschinelles Lernen, das mit den ersten Trainingsdaten (S3) trainiert wurde;
   Ändern einer Anzahl von Teilen von mindestens einem Datenstück, das aus den ersten Trainingsdaten und den zusätzlichen Daten ausgewählt wurde, sodass ein Verhältnis von Teilen der zusätzlichen Daten zu Teilen der ersten Trainingsdaten durch Upsampling oder Downsampling von mindestens einem der ersten Trainingsdaten und der zusätzlichen Daten (S5, S6) einen bestimmten Wert (a) einnimmt;
   Erfassen von zweiten Trainingsdaten durch Kombinieren der ersten Trainingsdaten und der zusätzlichen Daten (S8); und
   erneutes Trainieren des ersten Modells für maschinelles Lernen unter Verwendung der zweiten Trainingsdaten (S10).

2. Informationsverarbeitungsprogramm nach Anspruch 1, wobei das Erzeugen Verwenden einer Optimierungstechnik einschließt.

3. Informationsverarbeitungsverfahren, damit ein Computer einen Prozess ausführt, der Folgendes umfasst:

   Trainieren eines ersten Modells für maschinelles Lernen unter Verwendung von ersten Trainingsdaten, um ein trainiertes Modell (S2) für maschinelles Lernen zu erzeugen;
   Erzeugen von zusätzlichen Daten durch Eingeben von bedeutungslosen Daten in das erste Modell für maschinelles Lernen, das mit den ersten Trainingsdaten (S3) trainiert wurde;
Ändern einer Anzahl von Teilen von mindestens einem Datenstück, das aus den ersten Trainingsdaten und den zusätzlichen Daten ausgewählt wurde, sodass ein Verhältnis von Teilen der zusätzlichen Daten zu Teilen der ersten Trainingsdaten durch Upsampling oder Downsampling von mindestens einem der ersten Trainingsdaten und der zusätzlichen Daten (S5, S6) einen bestimmten Wert (a) einnimmt;
Erfassen von zweiten Trainingsdaten durch Kombinieren der ersten Trainingsdaten und der zusätzlichen Daten (S8); und
erneutes Trainieren des ersten Modells für maschinelles Lernen unter Verwendung der zweiten Trainingsdaten (S10).

4. Informationsverarbeitungsverfahren nach Anspruch 3, wobei das Erzeugen Verwenden einer Optimierungstechnik einschließt.

5. Informationsverarbeitungsvorrichtung (1), umfassend:

   eine erste Trainingsausführungseinheit (101), die so konfiguriert ist, dass sie unter Verwendung von ersten Trainingsdaten ein erstes Modell für maschinelles Lernen trainiert, um ein trainiertes Modell für maschinelles Lernen zu erzeugen;
   eine Einheit (103) zur Erstellung von zusätzlichen Daten, die so konfiguriert ist, dass sie durch Eingeben von bedeutungslosen Daten in das erste Modell für maschinelles Lernen, das mit den ersten Trainingsdaten trainiert wurde, zusätzliche Daten erzeugt;
   eine Minibatch-Erstellungseinheit (104), die so konfiguriert ist, dass sie eine Anzahl von Teilen von mindestens einem Datenstück, das aus den ersten Trainingsdaten und den zusätzlichen Daten ausgewählt wurde, verändert, sodass ein Verhältnis von Teilen der zusätzlichen Daten zu Teilen der ersten Trainingsdaten durch Upsampling oder Downsampling von mindestens einem der ersten Trainingsdaten und der zusätzlichen Daten einen bestimmten Wert (a) einnimmt;
   eine zweite Trainingsdatenerstellungseinheit (104), die so konfiguriert ist, dass sie durch Kombinieren der ersten Trainingsdaten und der zusätzlichen Daten zweite Trainingsdaten erfasst; und
   eine zweite Trainingsausführungseinheit (105), die so konfiguriert ist, dass sie das erste Modell für maschinelles Lernen unter Verwendung der zweiten Trainingsdaten erneut trainiert.

**6.** Informationsverarbeitungsvorrichtung nach Anspruch 5, wobei die Einheit zur Erstellung von zusätzlichen Daten weiter eine Optimierungstechnik verwendet, um die zusätzlichen Daten zu erzeugen.

**Revendications**

**1.** Programme de traitement d'informations qui amène au moins un ordinateur à exécuter un processus, le processus comprenant :

l'entraînement d'un premier modèle d'apprentissage automatique par l'utilisation de premières données d'apprentissage pour générer un modèle d'apprentissage automatique entraîné (S2) ;
la génération de données supplémentaires par l'entrée de données sans signification dans le premier modèle d'apprentissage automatique qui a été entraîné avec les premières données d'apprentissage (S3) ;
le changement d'un certain nombre d'éléments d'au moins une donnée sélectionnée parmi les premières données d'apprentissage et les données supplémentaires de sorte qu'un rapport d'éléments des données supplémentaires à des éléments des premières données d'apprentissage représente une certaine valeur (a) par un sur-échantillonnage ou un sous-échantillonnage des premières données d'apprentissage et/ou des données supplémentaires (S5, S6) ;
l'acquisition de secondes données d'apprentissage par la combinaison des premières données d'apprentissage et des données supplémentaires (S8) ; et
le réentraînement du premier modèle d'apprentissage automatique par l'utilisation des secondes données d'apprentissage (S10).

**2.** Programme de traitement d'informations selon la revendication 1, dans lequel la génération inclut l'utilisation d'une technique d'optimisation.

**3.** Procédé de traitement d'informations pour qu'un ordinateur exécute un processus comprenant :

l'entraînement d'un premier modèle d'apprentissage automatique par l'utilisation de premières données d'apprentissage pour générer un modèle d'apprentissage automatique entraîné (S2) ;
la génération de données supplémentaires par l'entrée de données sans signification dans le premier modèle d'apprentissage automatique qui a été entraîné avec les premières données d'apprentissage (S3) ;
le changement d'un certain nombre d'éléments d'au moins une donnée sélectionnée parmi les premières données d'apprentissage et les données supplémentaires de sorte qu'un rapport d'éléments des données supplémentaires à des éléments des premières données d'apprentissage représente une certaine valeur (a) par un sur-échantillonnage ou un sous-échantillonnage des premières données d'apprentissage et/ou des données supplémentaires (S5, S6) ;
l'acquisition de secondes données d'apprentissage par la combinaison des premières données d'apprentissage et des données supplémentaires (S8) ; et
le réentraînement du premier modèle d'apprentissage automatique par l'utilisation des secondes données d'apprentissage (S10).

**4.** Procédé de traitement d'informations selon la revendication 3, dans lequel la génération inclut l'utilisation d'une technique d'optimisation.

**5.** Appareil de traitement d'informations (1) comprenant :

une première unité d'exécution d'entraînement (101) configurée pour entraîner un premier modèle d'apprentissage automatique par l'utilisation de premières données d'apprentissage pour générer un modèle d'apprentissage automatique entraîné ;
une unité de création de données supplémentaires (103) est configurée pour générer des données supplémentaires par l'entrée de données sans signification dans le premier modèle d'apprentissage automatique qui a été entraîné avec les premières données d'apprentissage ;
une unité de création de mini-lot (104) configurée pour changer un certain nombre d'éléments d'au moins une donnée sélectionnée parmi les premières données d'apprentissage et les données supplémentaires de sorte qu'un rapport d'éléments des données supplémentaires à des éléments des premières données d'apprentissage représente une certaine valeur (a) par un sur-échantillonnage ou un sous-échantillonnage des premières données d'apprentissage et/ou des données supplémentaires ;
une unité de création de secondes données d'apprentissage (104) est configurée pour acquérir des secondes données d'apprentissage par combinaison des premières données d'apprentissage et des données supplémentaires ; et
une seconde unité d'exécution d'entraînement (105) est configurée pour réentraîner le premier modèle d'apprentissage automatique par utilisation des secondes données d'apprentissage.

6. Appareil de traitement d'informations selon la revendication 5, dans lequel l'unité de création de données supplémentaires utilise en outre une technique d'optimisation pour générer les données supplémentaires.

# FIG. 1

# FIG. 2

1

100

TRAINING PROCESSING UNIT

101

FIRST TRAINING
EXECUTION UNIT

102

ADDITIONAL TRAINING
DATA CREATION UNIT

103

ADDITIONAL DATA
CREATION UNIT

104

MINI-BATCH
CREATION UNIT

105

SECOND TRAINING
EXECUTION UNIT

# FIG. 3

N PARTS

TRAINING DATA A

TRAINING DATA B

ADDITIONAL DATA

MINI-BATCHES

SEPARATELY SHUFFLE
TRAINING DATA A AND
ADDITIONAL DATA

# FIG. 4

# FIG. 5

START

PREPARE EMPTY MACHINE LEARNING MODEL AND TRAINING DATA A — S1

TRAIN EMPTY MACHINE LEARNING MODEL BY USING TRAINING DATA A => TRAINED MACHINE LEARNING MODEL A — S2

GENERATE ADDITIONAL DATA FOR TRAINED MACHINE LEARNING MODEL A BY USING OPTIMIZATION TECHNIQUE — S3

RATIO OF ADDITIONAL DATA TO TRAINING DATA A IS SMALLER THAN PREDETERMINED RATIO α — S4

YES

PERFORM AT LEAST ONE OF DOWN-SAMPLING OF TRAINING DATA A AND UP-SAMPLING OF ADDITIONAL DATA TO SET RATIO TO PREDETERMINED RATIO α (USE TECHNIQUE SUCH AS NOISE ADDITION FOR UP-SAMPLING) — S6

NO

PERFORM AT LEAST ONE OF UP-SAMPLING OF TRAINING DATA A AND DOWN-SAMPLING OF ADDITIONAL DATA TO SET RATIO TO PREDETERMINED RATIO α (USE TECHNIQUE SUCH AS NOISE ADDITION FOR UP-SAMPLING) — S5

RANDOMLY REARRANGE EACH OF TRAINING DATA AND ADDITIONAL DATA AND EQUALLY DIVIDE TRAINING DATA AND ADDITIONAL DATA INTO N — S7

COMBINE N-PART DIVIDED TRAINING DATA A AND N-PART DIVIDED ADDITIONAL DATA TO GENERATE N-PART DIVIDED TRAINING DATA B — S8

FURTHER TRAIN TRAINED MACHINE LEARNING MODEL A BY USING EACH OF MINI-BATCHES OF N-PART DIVIDED TRAINING DATA B => ADDITIONALLY TRAINED MACHINE LEARNING MODEL B — S9

OUTPUT ADDITIONALLY TRAINED MACHINE LEARNING MODEL B — S10

END

## FIG. 6

| | MODEL ACCORDING TO RELATED-ART TECHNIQUE | MODEL TRAINED BY PRESENT INFORMATION PROCESSING APPARATUS |
|---|---|---|
| MODEL PERFORMANCE (ACCURACY) | 0.9888 | 0.9863 |
| RESISTANCE AGAINST TRAINING DATA ESTIMATION (RESULT OF ATTACK) | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020115312 A
- JP 2020119044 A

**Non-patent literature cited in the description**

- **DIVYAM MADAAN et al.** *Learning to Generate Noise for Robustness against Multiple Perturbations*
- **QINGRONG CHEN et al.** *Differentially Private Data Generative Models*
- **AN QIU et al.** *FenceBox: A Platform for Defeating Adversarial Examples with Data Augmentation Techniques*